# EUROPEAN PATENT SPECIFICATION

(11) **EP 3 780 507 B1**
(45) Date of publication and mention of the grant of the patent: **18.09.2024**
(21) Application number: 19191153.6
(22) Date of filing: 11.08.2019
(51) Int. Cl.: H04L 12/40

(54) **METHOD AND SYSTEM FOR PERFORMING DOUBLE MESSAGE ARBITRATION**
VERFAHREN UND SYSTEM ZUR DURCHFÜHRUNG DOPPELTER NACHRICHTENARBITRIERUNG
PROCÉDÉ ET SYSTÈME PERMETTANT D'EFFECTUER UN DOUBLE ARBITRAGE DE MESSAGES

(43) Date of publication of application: 17.02.2021
(73) Proprietor: Yamar Electronics Ltd., 6249220 Tel-Aviv (IL)
(72) Inventor: MARYANKA, Yair, 6249220 Tel-Aviv (IL); PRIEL, Eran, 6249220 Tel-Aviv (IL)
(74) Representative: Heilein, Ernst-Peter

(56) References cited:
- EP-A1- 2 521 319
- EP-A2- 1 921 801
- WO-A1-2007/144605
- US-A1- 2004 254 700
- GIANLUCA CENA ET AL: "A Multistage Hierarchical Distributed Arbitration Technique for Priority-Based Real-Time Communication Systems", IEEE TRANSACTIONS ON INDUSTRIAL ELECTRONICS, IEEE SERVICE CENTER, PISCATAWAY, NJ, USA, vol. 49, no. 6, 1 December 2002 (2002-12-01), XP011073787, ISSN: 0278-0046

## Description

### Background of the Invention

The present invention relates to a method and system for performing message arbitration, especially double message arbitration, in a first communication network, based on arbitration information of a physically existing second communication network.

### State of the Art

Generally, vehicles, airplanes and the like employ many sensors, actuators, controllers, sub-systems, buses, etc. that require appropriate controlling of the communication between interconnected nodes or devices. As the number of the communication channels and/or protocols within the vehicles increases so does the methodology of supporting the controlling of those systems.

For instance, modern cars comprise a plurality of electronic control devices for various subsystems. Typically, the biggest processor is the engine control unit. Others are used for transmission, airbags, audio systems, power windows, doors, mirror adjustment etc. Some of these form independent subsystems or communication channel, but inter-communications among other systems may be essential for the security, reliability and/or convenience of a modern car. To cope with this, various communication protocols were introduced; some of which employ arbitration to allow random access of control devices to the network. CAN standard is an example to one possible bus system, but other communication protocols can also be used in parallel.

Therefore, if the systems comprise a plurality of devices interconnected to communicate over different protocols there is a need in ensuring a proper arbitration of the message flow within the network.

EP 1 921 801 A2 discloses generally a network with a plurality of nodes and a plurality of bidirectional point to point connection links. To ensure a proper message communication a priority-based arbitration technique is implemented. EP 1 921 801 A2 discloses the well-known priority based arbitration of the CAN-protocol.

US 2004/254700 A1 discloses a vehicle communication network with a plurality of network elements and a plurality of communication links interconnecting the network elements in a point-to-point configuration. The traffic on the communication links is controlled by means of an arbitration method like for instance the CAN arbitration method.

Finally, reference should be made to the article of GIANLUCA CENA et.al: "A multistage Hierarchical Distributed Arbitration Technique for Priority-Based Real-Time Communication Systems", IEEE TRANSACTIONS ON INDUSTRIAL ELECTRONICS, IEEE SERVICE CENTER, PISCATAWAY, MJ, USA, vol. 49, no. 6, which only discloses a multistage CAN-based network.

### Object of the present invention

Therefore, an object of the present invention is to provide cross-border secure and reliable data communication over different data networks or sub-systems.

### Summary of the present invention

According to the present invention, a method for performing message arbitration in a first communication network on the basis of physical arbitration of a physically existing second communication network according to claim 1 is provided. The first communication network comprises a plurality of first nodes which are in turn interconnected with corresponding second nodes of the second communication network.

The method according to the present invention comprises in a first step receiving a message from a first node at a corresponding second node, wherein the message comprises physical arbitration data of said first communication network. Based on the received message data generating a message-frame at said second node follows. The message-frame includes a start preamble comprising a modified arbitration sequence of said first communication network and subsequently transmitting of the message-frame over the second communication network by said corresponding second node (DCAN device) is provided.

According to the present invention, a modified arbitration sequence corresponds to a bit-wise replacement of said first arbitration sequence with a phase\frequency sequence that is adapted to the second network. Therefore, a cross-border arbitration, that is a double arbitration, over different kind of networks can be achieved.

Therefore, the method according to the present invention ensures arbitration on one medium i.e. network when the original message arbitration is performed on a different, second medium. According to the present invention, the aforementioned networks or media can be wire based (wired) or wireless (over air, optical or the like). Both techniques may profit from the methodology according to the present invention.

Furthermore, advantageously if for instance a first communication network is to be implemented there is no need to implement a first physical network because the method of the present invention allows emulation of the first communication over the already existing infrastructure associated with the second communication network. Therefore, material costs like wires or the like are unnecessary.

According to a second aspect of the present invention a protocol-based data transmission system is provided. The system comprises a plurality of first nodes and a plurality of second nodes, wherein said first nodes are required to communicate by means of a second communication network and said second nodes being adapted to communicate according to the aforementioned method.

Thus, a system for data communication is provided, which allows interconnection of devices within different used communication networks. Advantageously the arbitration technology of a first network can be used to ensure controlled data communication within the second network as well.

### Embodiments of the invention

According to an embodiment of the present invention the generated message-frame further comprises at least one data set, error correction code information and a message suffix. Hence, a secure and reliable data communication between pluralities of nodes is ensured.

The second node is adapted to detect data transmission in said second communication network and in turn to inform said corresponding first node to suspend message sending. By means of such mechanism bus congestion for instance over physical lines may be omitted. This is very advantageous if plurality of nodes or devices share the same communication line.

According to an embodiment the second node sends a reserved message of said corresponding first node after detecting data transmission in said second communication network, said reserved message causing losing arbitration procedure of said first node within said first communication network. Consequently, the present invention allows additionally also a local arbitration between the concerned controller and its counterpart device interconnecting the second data communication network.

The detected data transmission may correspond to data traffic within said second communication network and/or data traffic of the corresponding node within said first data communication network. Hence, cross boarder data arbitration between different networks and/or local communication between corresponding devices can be achieved.

According to an embodiment the method according to the present invention further comprises detecting a network contention of said second data communication network and sending said reserved message to said corresponding first node. Accordingly, the method ensures that the first nodes to be used is always in idle mode if an involved second node intents to release a message over the second nodes or communication channel.

It is conceivable that the second data communication network is a wired communication channel or a wireless communication channel. Thus, different kinds of data communication networks can be arbitrated by means of the method of the present invention.

According to embodiment of the second aspect of the present invention the second nodes comprises a communication interface to communicate with said corresponding first node using first network protocol. This allow proper interconnection between involved communication nodes.

The second nodes comprises a first communication interface to communicate with said corresponding first node using a first-network protocol, and second communication interface to communicate over a second communication network and/or a wireless network using a second-network protocol. Therefore, the second devices may act as a communication bridge to interconnect different types of data communication networks.

The accompanying figures are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description.

### Short description of the figures

The invention is explained in further detail, by way of example and with reference to the accompanying drawings wherein:
- Fig. 1: shows the principle of the present invention for a CAN bus as an example;
- Fig. 2: shows a communication network in a vehicle according to the present invention;
- Fig. 3: shows an implementation a DCAN device according to an embodiment of the present invention;
- Fig. 4: illustrates the structure of a CAN-frame according to an embodiment of the present invention;
- Fig. 5: shows a timing diagram for two connected devices according to the present invention;
- Fig. 6: shows the timing behavior during transmission of a message according to an embodiment of the present invention; and
- Fig. 7: shows the timing behavior during receiving of a message according to an embodiment of the present invention.

### Detailed Description

In the following reference is made to the accompanying drawings, which form a part hereof, and in which is shown by way of illustration specific embodiments in which the invention may be practiced. In this regard, directional terminology, such as "top," "bottom," "front," "back," etc., is used with reference to the orientation of the figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

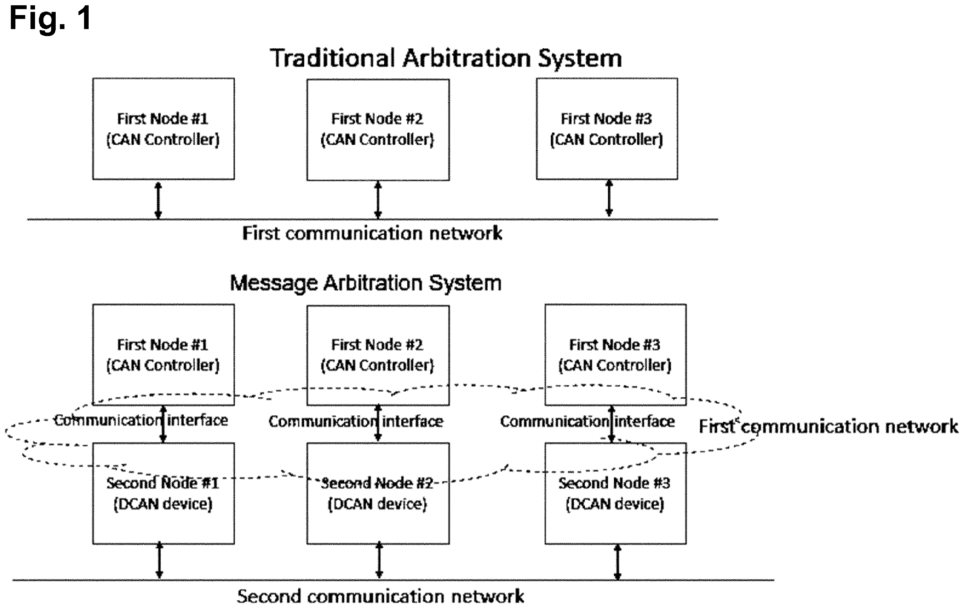

**Fig. 1** illustrates the principle of the present invention wherein two different communication networks with their corresponding interconnection nodes are schematically shown. According to the present invention a method for message arbitration on one medium when the original message arbitration is performed on a different medium is provided. According to a possible embodiment both media (communication networks) are wire based but also other networks like for instance wireless or hybrids are conceivable which may benefit of the methodology of the present invention.

In Fig. 1 the interconnection of two different communication networks is schematically shown, According to an example the first communication network may be a CAN bus and the second communication network a power line (PL) network. Other constellation of networks are imaginable within the scope of the invention.

According to one embodiment, the second communication network is the physically existing network and the first communication network with its first nodes uses the second network to communicate. Within the first communication network a CAN arbitration procedure may be implemented whereby the arbitration data is used for the message arbitration on the second network. Thus the system working according to the method of the present invention benefits over the traditional arbitration data, for instance CAN arbitration, on the second communication network.

Therefore, for instance, a CAN network is built on a second physical network (PL) whereby the message arbitration on the second network is based on arbitration procedures of the first network. Additionally, no dedicated first network hardware is necessary because the wires of the PL network according to one possible implementation can be used.

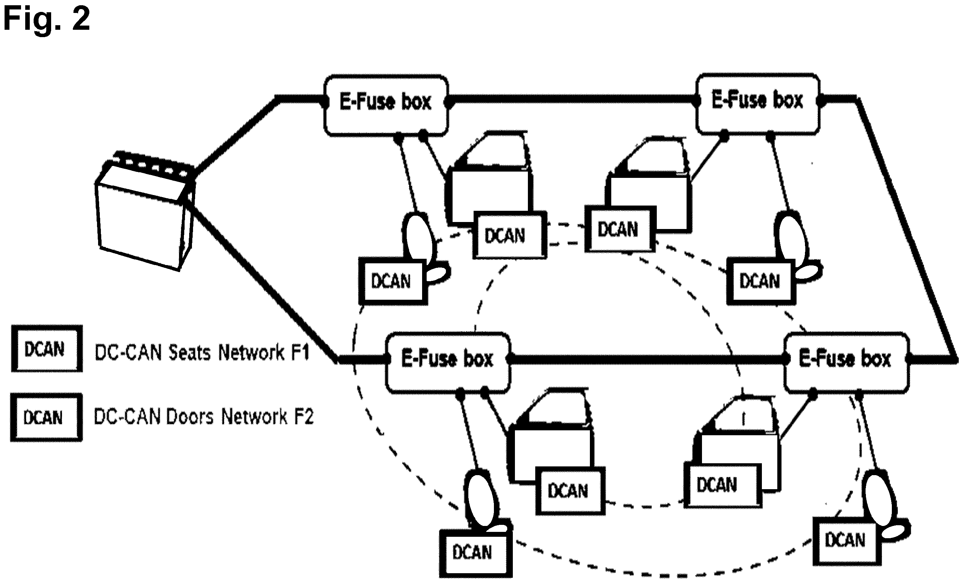

**Fig. 2** depicts an embodiment of the present invention as a use case in a vehicle. Two independent CAN communication networks are implemented as an example. The first one for carrying CAN traffic belonging to the vehicle doors, and the second one for carrying CAN traffic of vehicle seats. No dedicated CAN lines are used. Instead, all traffic is converted from CAN protocol to power line (PL) protocol using DCAN devices, when transmitting, and from power line protocol back to CAN protocol when receiving. The doors network traffic is communicated over the power line using a first dedicated carrier frequency, while the seats network employs a second dedicated frequency. Therefore, two virtual CAN networks are formed, whereby the dedicated PL in the vehicle for data transmission is used by omitting usage of dedicated CAN bus copper wires.

In this example only two networks are shown but the present invention may be implemented for several concurrent CAN networks. Additionally, the PL protocol can be replaced by a wireless protocol for instance. This makes the method of the present invention flexible and adaptable for all kinds of imaginable networks.

To ensure a proper interconnection between the paired devices in the communication system a suitable message arbitration according to the invention is implemented.

On the CAN bus or network respectively a bit-wise arbitration can be used. According to the method of the invention the CAN-based arbitration is transferred from the CAN network to the PL network. Therefore, a second arbitration procedure on the second data network is needed. According to the invention the arbitration data or sequences, respectively are used for the arbitration of messages in the second communication network. The DCAN device transforms or translates the CAN messages to corresponding data structures which can be conveyed over the PL network for instance. The arbitration sequence of the first network is therefore used for arbitration on the PL network, that is the second network.

Thus, the present invention ensures double arbitration between DCAN device and its CAN counterpart controller and between DCAN device and other DCAN devices over the PL network. All major network topologies and their modification can be implemented in light of the present invention including, but not limited to: star, ring, line and tree. Multiple DCAN device networks can operate over single power line, whereas each network communicates over different carrier frequency (a.k.a. channel). To this end, DCAN devices provide a seamless interface, providing complete support for the CAN arbitration process, simultaneously with arbitration on the power line physical medium, that is the PL network.

According to this embodiment the present invention ensures proper arbitration in a communication network consisting of at least two CAN controllers that are can send data traffic over a physical power line, rather than over dedicated copper CAN lines. Thus, material costs for setting up a dedicated CAN bus can be omitted.

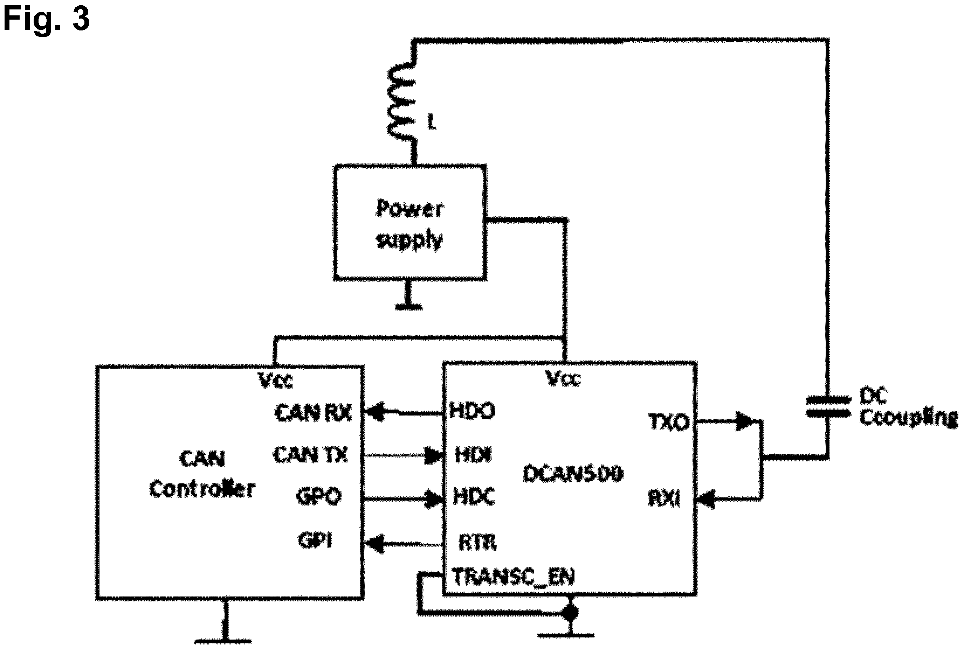

With reference to **Fig. 3****,** each CAN controller connects to a DCAN device that is adapted to convert the CAN protocol-compliant traffic to power line protocol-compliant traffic. As already mentioned, the CAN and the PL protocols are used only as possible embodiment. The number of DCAN nodes on the PL network equals the number of CAN nodes, the invention can be implemented wherein a single DCAN device connects to a CAN network consisting of more than one CAN controller. In this case the DCAN device can communicate with a plurality of CAN controllers or nodes in parallel. This may be cost effective, as less hardware within the network has to be used,

The CAN controllers within the dedicated CAN network must adhere to the CAN protocol. That means that standard-defined parameters such as: bitrate and timing requirements, voltage levels, number of physical lines, message structure and bus arbitration procedures are fixed. In turn the DCAN devices according to the present invention must adhere to the CAN protocol as well as to the corresponding power line PL protocol. Namely, when interfacing one protocol to another, the DCAN - as the interfacing devices - must exhibit CAN-compliant behavior on the CAN side of the network, and power line-compliant behavior on the power line side of the network. The flexibility of the DCAN device according to an embodiment of the present invention is exemplary shown in the implementation with reference to Fig. 2 above.

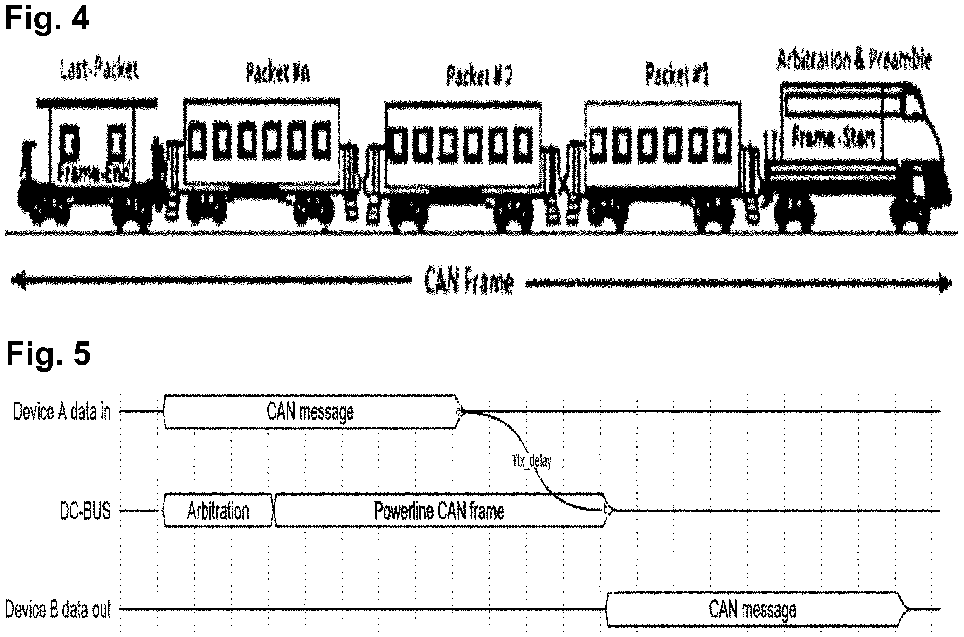

**Fig. 4** schematically explains the message structure according to the present invention. Each CAN message (termed CAN message) that is generated by a CAN controller is converted into a single DCAN frame (termed PL-Frame) for transmission over the physical power line. With reference to Fig. 4, a PL-Frame carries CAN messages. The PL-frame over the power line consists of a Frame-Start, in turn consisting of arbitration and preamble patterns, followed by at least one data packet, and terminated with a Frame-End, indicating the last packet of the frame. A data packet can carry any number of bytes, but can also be null, i.e. carry no information at all. An Error Correction Code (ECC) protects each data packet. As depicted in Fig. 4 the PL-Frame can include more bits than a CAN message and can be at a different bitrate. The DCAN device has an automatic provision, termed 'DUMMY-MSG', to prevent bus contention.

Because all devices can send data over the same physical line and no master device is present a proper arbitration procedure has to be implemented. In this embodiment for instance line arbitration is conceivable. The arbitration is intended to resolve a conflict when two or more network nodes wish to transmit information on a common communication line simultaneously. Assuming that two, or more, nodes try to access the line simultaneously, the node with the smallest (lowest) identification (ID) number, will get access to the line and be permitted to send its information on the line - this node will be referred to as the "arbitration-winner". One arbitration process can be found with reference to a well-known CAN protocol standard, wherein the bit-wise arbitration is disclosed.

Generally CAN is a "carrier sense" multiple access protocol, which means that each node observes the bus before transmitting data on it, and if it detects that there is some data on the bus it does not transmit its own data and waits for some predefined time and then tries again. This ensures no corrupting an ongoing transfer on the bus. But there may be a condition when two nodes start transmitting at exact same time. Thus, CAN protocols embodies collision detection and bit wise arbitration.

Data is transmitted by nodes on the bus in form of frames which are schematically shown with reference to Fig. 4 and 5 of the present description. The PL frame has multiple fields but for arbitration only SOF (Start of Frame) and the identifier ID is of interest (not shown in Fig. 4 and 5). SOF is a pattern adapted to signal start of a frame to all other nodes on the bus. The subsequent field within the PL frame is the ID which prioritize the message. The lower the identifier, the higher is the priority of the message.

Assuming that two nodes start transmitting at same time both will transmit SOF bit at same time and next the nodes will start transmission of the ID. In this example the ID comprise 11 bits but other lengths may be implemented or used depending on the protocol.

Each node transmits one after the other bits of the ID and compares it with the received bit from the other transmitting party. When a node detects that the "1" bit it transmitted and the bit it sensed back is "0" it knows that a higher priority message is being transmitted on the bus and it starts listening and stops transmitting. This arbitration mechanism thus ensures that no data corruption on the bus may occur.

With reference to **Fig. 5** the arbitration procedure according to the present invention is shown, wherein DCAN Device A wins the arbitration and DCAN Device B receives the message from the corresponding device.

In the following the transmit flow according to the present invention is described. Upon receiving a CAN message from its CAN controller, the DCAN device A generates Start-frame pattern that is transmitted over the power line, as schematically shown in Fig. 5. The Start-frame consists of unique power line arbitration based on the controller's CAN message ID in accordance with one possible embodiment.

When a DCAN node within the network wins the arbitration over the power line (that is the second communication network), the DCAN device A wins the arbitration in this example, and following it will respond to the controller with an ACK message at the designated CAN ACK-slot, and transmit a PL frame to all attached DCAN nodes over the power line, that is the DCAN Device B according to the exemplary implementation.

For instance, if a DCAN node (device) loses the arbitration over the power line due to the transmission of another DCAN device (not shown in Fig. 4), it will generate a NACK message that will be sent to the corresponding CAN controller at the designated ACK-slot and the DCAN device will abort the transmission, receive the PL-Frame (send by the winning DCAN device A) from the power line and transfer it to the corresponding CAN controller B. Therefore, the CAN controller, whose corresponding DCAN device lost arbitration, may determine whether to re-transmit the CAN message or discard it.

Each CAN controller is connected to its corresponding DCAN device (see Fig. 2 and Fig. 3), and therefore it has no knowledge if there is ongoing traffic on the power line. The DCAN devices, on the other hand, are connected to the power line, and therefore know if the power line is busy (traffic is ongoing). Hence, if a specific CAN controller wishes to transmit a CAN message when the power line is busy, it is up to the corresponding DCAN device to "inform" this CAN controller that it cannot send any data at this time. This can only be achieved while adhering to the CAN protocol according to the present invention.

This is realized accordingly by making the CAN controller believe that it lost arbitration over the CAN bus, that is a lost arbitration state is emulated. For this purpose, a DUMMY-MSG is defined which is an empty, or "zero" CAN message, whose ID = 0 (according to the CAN specification the CAN massage ID=0 is preserved). For the arbitration procedure, such a message will always win the local CAN arbitration with its CAN controller, imposing an artificial delay in the CAN controller TX flow.

According to an embodiment there are at least two other possibilities wherein the reserved DUMMY-MSG is generated.

Firstly, (case 1) if it is detected that the CAN controller initiates a new CAN message transfer while previous CAN message is still being transmitted over the power line (busy PL). In this case, the DUMMY-MSG will make the CAN controller lose arbitration over the CAN bus, and it will have to wait for the duration of the DUMMY-MSG and become a receiver node. Therefore, bus congestions can be avoided as no transmission will occur until the PL bus is in an idle mode.

Secondly (case 2) when the CAN controller initiates a new CAN message while the corresponding DCAN device is in the process of PL frame reception from the power line; in this case, the DCAN-generated DUMMY-MSG, will make the corresponding CAN controller wait until completion of power line PL Frame reception.

Thus, the DCAN node according to the invention will always generate DUMMY-MSGs for as long as the power line is not idle and while the CAN controller tries to initiate a new CAN message transfer.

In the following a receive flow (RX flow) for messages according to the invention is described. Upon detecting a power line PL-Frame, the DCAN device will convert the PL-frame into a CAN message, and then send it to the corresponding CAN controller over the local CAN bus (local link), see Fig. 3, especially CAN RX input of the local CAN node.

A CAN controller - DCAN device conflict can occur when in an event where the CAN controller begins transferring CAN message to the corresponding DCAN device while the DCAN device simultaneously begins transferring its received power line PL-Frame to the said CAN controller. According to the teachings of the present invention there is provided a method for resolving such conflict by initiating a local CAN-bus arbitration process between said CAN controller and the corresponding DCAN device. If the CAN controller wins the local arbitration, the DCAN device will stop its transfer of the power line PL-Frame and receive the controller's CAN message for later transmission over the power line. Then, the DCAN will automatically transfer that power line CAN message to the corresponding CAN controller.

When the CAN controller loses the local CAN-bus arbitration to the DCAN device, the power line PL-Frame will be fully transferred to the CAN controller. Then, CAN controller may transfer that CAN message or it can be discarded according to a possible implementation.

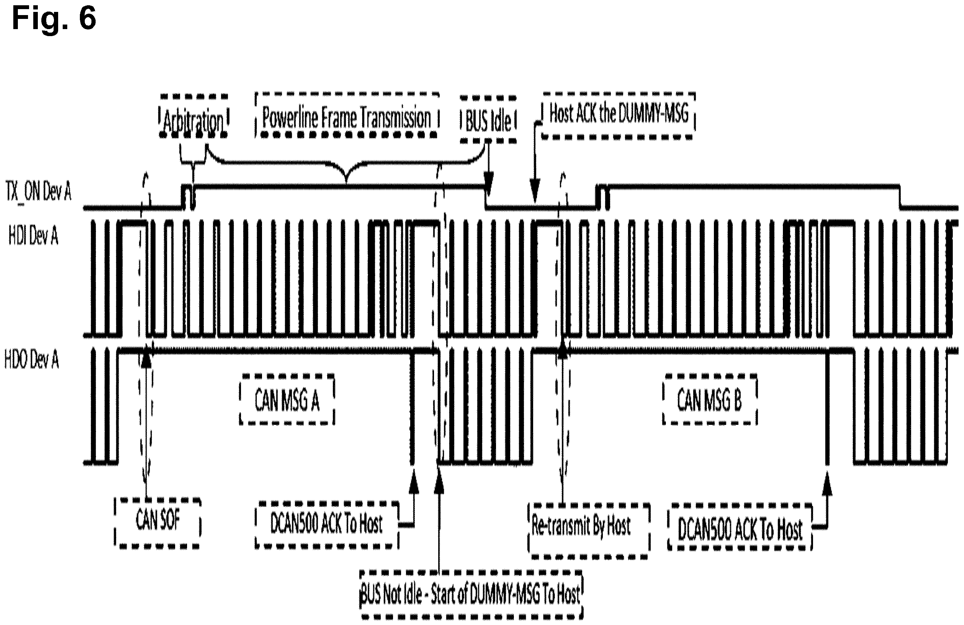

With reference to **Fig. 6** (and 7) the message handling (transmission TX and reception RX flows) of the method according to the present invention is schematically depicted.

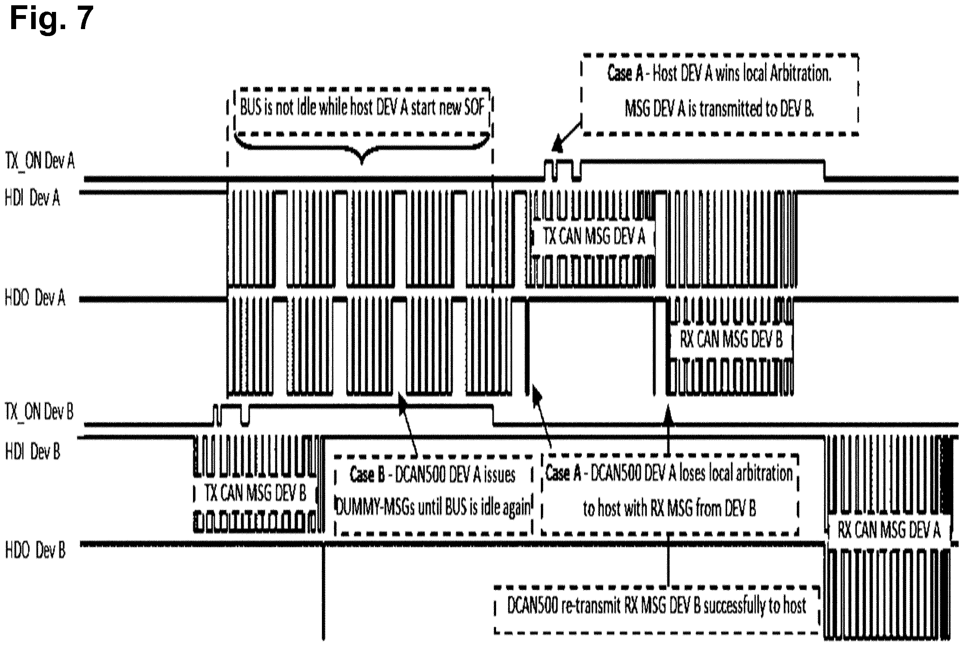

**Fig 7** illustrates how the corresponding CAN controller transmits consecutive CAN messages according to one possible implementation. By way of example, a CAN protocol that defines 3-bit minimal time between two consecutive transmissions is assumed.

Since the power line PL-Frame (Fig. 3) may be longer than a CAN controller's message, the CAN controller must wait until the power line is available to avoid timing hazards. In this example, Example 1, the DCAN device issues a DUMMY-MSG (empty message) to its CAN controller to delay the transfer of a new message until completion of the ongoing CAN power line transmission. Example 1 - Fig. 6 depicts two CAN messages A and B with a delay of less than 400µs. Although CAN message A is still transmitted over the power line, the CAN controller initiates a new message B. Upon detection of the start-of-frame (SOF) of the new message B, the DCAN immediately initiates a DUMMY-MSG. When the transmission of message A is completed over the power line, the power line is available again and the CAN controller re-transmits the CAN message B by the DCAN over the power line.

Example 2 - CAN controller generates new SOF while the corresponding DCAN device is in the process of receiving powerline PL-frame from another DCAN node.

Fig. 7 explains exemplary how the corresponding CAN controller A generates new SOF while its DCAN device is receiving power line PL-frame from another DCAN node B.

For the sake of clarity this example can be divided into two sub-scenarios. Case A - Powerline PL-frame was fully decoded and is ready to be transferred to controller. In this case, the DCAN start transferring the power line PL-Frame to the CAN controller. If the controller starts at the same time transferring its own CAN message, a local arbitration will take place between the DCAN and the controller (same as performed in CAN-BUS see above). The message with the higher ID priority will win.

In case the DCAN loses the local arbitration, it will receive the CAN message from its CAN controller, and then it will, transmit the controller CAN message over the power line. Then, the DCAN will retransmit its waiting power line PL-Frame to the corresponding controller again.

Case B - Powerline PL-frame is detected but not fully decoded by DCAN device before corresponding CAN controller A new SOF.

In this case the DCAN has detected a new power line PL-Frame from DCAN B prior to start of a new CAN message from the CAN controller A. Thus, the DCAN A issues a DUMMY-MSG until the power line is idle again. The CAN controller A loses the local arbitration and becomes a receiver. The DCAN

A repeats to issue DUMMY-MSG as long as the power line is not idle. Thus avoiding possible bus conflicts.

The sequence starts when CAN message B is transmitted to the DCAN B node while the power line is idle. After a while, CAN controller A tries to transmit its CAN message A. Due to the fact the DCAN A is already in the process of detecting DCAN B's power line PL-Frame, it will issue DUMMY-MSG to CAN controller A until the power line is idle again.

When DCAN device A is done with receiving DCAN device B PL frame, the DCAN DEV A will start local arbitration with its corresponding controller (CAN controller A). If CAN controller A wins local arbitration, its CAN message is sent over the power line. Then, DCAN device A re-transmit DEV B MSG to its controller successfully. Controller DEV B receives successfully DEV A CAN MSG.

The described DCAN devices making use of the methodology of the present invention can be implemented as a FPGA semiconductor with hard logic programming, as a Digital Signal processor (DSP), or otherwise in application-specific (ASIC) semiconductor or the like.

Therefore, message arbitration within different data communication networks is ensured, wherein arbitration on one data network is performed on arbitration data stemming from the first communication network.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features.

Thus, the scope of the expression "a device comprising means A and B" should not be limited to devices or modules consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects.

Therefore, it is intended that this invention be limited only by the claims.

According to the present invention a data system is provided adapted to communicate according to a method for performing message arbitration in a first communication network on the basis of physical arbitration of a second communication network. The first communication network comprises a plurality of first nodes which are in turn interconnected with corresponding second nodes of the second communication network.

The method according to the present invention comprises in a first step receiving a message from a first node at a corresponding second node, wherein the message comprises arbitration data of said first communication network. Based on the received message data generating a message-frame at said second node follows. The message-frame includes a start preamble comprising a modified arbitration sequence of said first communication network and (upon successful arbitration) subsequently transmitting of the message-frame over the second communication network is provided.

Therefore, the method according to the present invention ensures arbitration on one medium i.e. network when the original message arbitration is performed on a different, second medium. According to the present invention, the aforementioned networks or media can be wire based or wireless. Both technologies can benefit from the methodology according to the present invention.

## Claims

1. Method for performing message arbitration in a first communication network (CAN Network), wherein the first communication network is a CAN network, on the basis of physical arbitration of a physically existing second communication network (PL), wherein the second communication network is a power line network, said first communication network comprising a plurality of first nodes (CAN Controllers), wherein the first nodes are CAN controllers, in turn interconnected with corresponding second nodes (DCAN Devices) of said second communication network (PL), wherein the second nodes are DCAN devices adapted to convert CAN protocol-compliant traffic to power line protocol-compliant traffic, said method comprising:
- Receiving a message from a first node (CAN Controller) at a corresponding second node (DCAN device), said message comprising arbitration data of said first communication network (CAN Network);
- Generating a message-frame at said second node (DCAN device), said message-frame having a start preamble (Frame-Start) comprising a modified arbitration sequence of said first communication network (CAN Network), wherein the modified arbitration sequence is generated based on a cross-border arbitration, that is a double arbitration, over different kind of networks, said modified arbitration sequence corresponding to a bit-wise replacement of arbitration data of the first communication network (CAN Network) adapted to the physically existing second communication network (PL); and
- Transmitting said message-frame over said second communication network (PL) by said corresponding second node (DCAN device).

2. Method according to claim 1, wherein said generated message-frame further comprises at least one data set (data package), error correction code information (ECC bits) and a message suffix (Frame-End).

3. Method according to claim 1 or 2, wherein said second node (DCAN device) is adapted to detect data transmission in said second communication network (PL) and in turn to inform said corresponding first node (CAN Controller) to suspend message sending.

4. Method according to any of the preceding claims, wherein said second node (DCAN device) sends a reserved message (DUMMY-MSG) to said corresponding first node (CAN Controller) after detecting data transmission in said second communication network (PL), said reserved message causing losing arbitration procedure of said first node (CAN Controller) within said first communication network (CAN Network).

5. Method according to any of the preceding claims, wherein said detected-data transmission corresponds to data traffic within said second communication network (PL) and/or data traffic of the corresponding node (CAN Controller) within said first data communication network (CAN Network).

6. Method according to any of the preceding claims, further comprising detecting a network contention of said second data communication network (PL) and sending said reserved message (DUMMY-MSG) to said corresponding first node (CAN Controller).

7. Method according to any of the preceding claims, wherein said second data communication network (PL) is a wired communication channel or a wireless communication channel.

8. Method according to any of the preceding claims, wherein said first data communication network (CAN Network) is a protocol-based Controller Area Network (CAN) bus network (CAN Network).

9. Protocol-based data transmission system, comprising a plurality of first nodes (CAN Controllers), wherein the first nodes are CAN controllers, and a plurality of second nodes (DCAN Devices), wherein said second nodes are required to communicate by means of a second communication network (PL), wherein the second nodes are DCAN devices adapted to convert CAN protocol-compliant traffic to power line protocol-compliant traffic, and said first nodes and second nodes being adapted to communicate according to the method of any of the preceding claims.

10. Data System according to claim 9, wherein said first nodes (CAN Controller) comprises a communication interface to communicate with said corresponding second node (DCAN Devices) using first network protocol.

11. Data System according to claim 9 or 10, wherein said second nodes (DCAN Devices) comprises a first communication interface to communicate with said corresponding first node (CAN Controller) using a first-network protocol, and second communication interface to communicate over a second communication network (PL) and/or a wireless network using a second-network protocol.

12. Data System according to any of claims 9 to 11, wherein said first communication interface is a CAN, CAN FD, high speed CAN, Remote Device Management (RDM).

13. Data System according to any of claims 9 to 12, wherein said wireless network is a WiFi network, a 5G network, a Bluetooth network.

## Patentansprüche

1. Verfahren zur Durchführung einer Nachrichtenarbitrierung in einem ersten Kommunikationsnetz (CAN-Netzwerk), wobei das erste Kommunikationsnetz ein CAN-Netzwerk ist, basierend auf einer physikalischen Arbitrierung eines physikalisch vorhandenen zweiten Kommunikationsnetzes (PL), wobei das zweite Kommunikationsnetz ein Energieverteilungsnetz ist, wobei das erste Kommunikationsnetz eine Mehrzahl erster Knoten (CAN-Controller) aufweist, wobei die ersten Knoten CAN-Controller sind, die ihrerseits mit entsprechenden zweiten Knoten (DCAN-Geräten) des zweiten Kommunikationsnetzes (PL) verbunden sind, wobei die zweiten Knoten DCAN-Geräte sind, die dafür ausgelegt sind, CAN-Protokoll-kompatiblen Datenverkehr in Energieverteilungs-Protokoll-kompatiblen Datenverkehr umzuwandeln, das Verfahren aufweisend:
- Empfangen einer Nachricht von einem ersten Knoten (CAN-Controller) an einem entsprechenden zweiten Knoten (DCAN-Gerät), wobei die Nachricht Arbitrierungsdaten des ersten Kommunikationsnetzes (CAN-Netzwerk) aufweist;
- Erzeugen eines Nachrichtenrahmens an dem zweiten Knoten (DCAN-Gerät), wobei der Nachrichtenrahmen eine Startpräambel (Rahmen-Start) hat, die eine modifizierte Arbitrierungssequenz des ersten Kommunikationsnetzes (CAN-Netzwerks) aufweist, wobei die modifizierte Arbitrierungssequenz basierend auf einer grenzüberschreitenden Arbitrierung, das heißt, einer doppelten Arbitrierung über unterschiedliche Arten von Netzwerken hinweg, erzeugt wird, wobei die modifizierte Arbitrierungssequenz einer bitweisen Ersetzung von Arbitrierungsdaten des ersten Kommunikationsnetzes (CAN-Netzwerks), die an das physikalisch vorhandene zweite Kommunikationsnetz (PL) angepasst sind, entspricht; und
- Übertragen des Nachrichtenrahmens über das zweite Kommunikationsnetz (PL) mittels des entsprechenden zweiten Knotens (DCAN-Gerät).

2. Verfahren nach Anspruch 1, wobei der erzeugte Nachrichtenrahmen ferner mindestens einen Datensatz (Datenpaket), Fehlerkorrekturcodeinformationen (ECC-Bits), und ein Nachrichtensuffix (Rahmen-Ende) aufweist.

3. Verfahren nach Anspruch 1 oder 2, wobei der zweite Knoten (DCAN-Gerät) dafür ausgelegt ist, eine Datenübertragung in dem zweiten Kommunikationsnetz (PL) zu erkennen und seinerseits den entsprechenden ersten Knoten (CAN-Controller) zu informieren, das Senden von Nachrichten auszusetzen.

4. Verfahren nach einem der vorhergehenden Ansprüche, wobei der zweite Knoten (DCAN-Gerät) eine reservierte Nachricht (DUMMY-MSG) an den entsprechenden ersten Knoten (CAN-Controller) sendet, nachdem er eine Datenübertragung im zweiten Kommunikationsnetz (PL) erkannt hat, wobei die reservierte Nachricht ein Unterliegen in der Arbitrierungsprozedur des ersten Knotens (CAN-Controller) innerhalb des ersten Kommunikationsnetzes (CAN-Netz) bewirkt.

5. Verfahren nach einem der vorhergehenden Ansprüche, wobei die Übertragung erkannter Daten einem Datenverkehr innerhalb des zweiten Kommunikationsnetzes (PL) und/oder einem Datenverkehr des entsprechenden Knotens (CAN-Controller) innerhalb des ersten Datenkommunikationsnetzes (CAN-Netzwerk) entspricht.

6. Verfahren nach einem der vorhergehenden Ansprüche, ferner aufweisend Erkennen eines Netzwerkkonflikts des zweiten Datenkommunikationsnetzes (PL) und Senden der reservierten Nachricht (DUMMY-MSG) an den entsprechenden ersten Knoten (CAN-Controller).

7. Verfahren nach einem der vorhergehenden Ansprüche, wobei das zweite Datenkommunikationsnetz (PL) ein drahtgebundener Kommunikationskanal oder ein drahtloser Kommunikationskanal ist.

8. Verfahren nach einem der vorhergehenden Ansprüche, wobei das erste Datenkommunikationsnetz (CAN-Netzwerk) ein protokollbasiertes CAN- (Controller Area Network) Bus-Netzwerk (CAN-Netzwerk) ist.

9. Protokollbasiertes Datenübertragungssystem, aufweisend eine Mehrzahl von ersten Knoten (CAN-Controllern), wobei die ersten Knoten CAN-Controller sind, und eine Mehrzahl von zweiten Knoten (DCAN-Geräten), wobei die zweiten Knoten erforderlich sind, um mittels eines zweiten Kommunikationsnetzes (PL) zu kommunizieren, wobei die zweiten Knoten DCAN-Geräte sind, die dafür ausgelegt sind, CAN-Protokoll-kompatiblen Verkehr in Energieverteilungs-Protokoll-kompatiblen Verkehr umzuwandeln, und wobei die ersten Knoten und die zweiten Knoten dafür ausgelegt sind, gemäß dem Verfahren eines der vorstehenden Ansprüche zu kommunizieren.

10. Datensystem nach Anspruch 9, wobei der erste Knoten (CAN-Controller) eine Kommunikationsschnittstelle zur Kommunikation mit dem entsprechenden zweiten Knoten (DCAN-Geräte) unter Verwendung des ersten Netzwerkprotokolls aufweist.

11. Datensystem nach Anspruch 9 oder 10, wobei die zweiten Knoten (DCAN-Geräte) eine erste Kommunikationsschnittstelle zur Kommunikation mit dem entsprechenden ersten Knoten (CAN-Controller) unter Verwendung eines ersten Netzwerkprotokolls und eine zweite Kommunikationsschnittstelle zur Kommunikation über ein zweites Kommunikationsnetz (PL) und/oder ein drahtloses Netzwerk unter Verwendung eines zweiten Netzwerkprotokolls aufweist.

12. Datensystem nach einem der Ansprüche 9 bis 11, wobei die erste Kommunikationsschnittstelle ein CAN, CAN FD, Hochgeschwindigkeits-CAN, oder eine Remote-Geräteverwaltung (Remote Device Management, RDM) ist.

13. Datensystem nach einem der Ansprüche 9 bis 12, wobei das drahtlose Netzwerk ein WiFi-Netzwerk, ein 5G-Netzwerk oder ein Bluetooth-Netzwerk ist.

## Revendications

1. Procédé pour exécuter un arbitrage de messages dans un premier réseau de communication (réseau CAN), ce premier réseau de communication étant un réseau CAN, en se basant sur l'arbitrage physique d'un deuxième réseau de communication existant physiquement (PL), ce deuxième réseau de communication étant un réseau sur courant porteur, ledit premier réseau de communication comportant une pluralité de premiers noeuds (contrôleurs CAN), ces premiers noeuds étant des contrôleurs CAN, interconnectés à leur tour avec des deuxièmes noeuds correspondants (dispositifs DCAN) dudit deuxième réseau de communication (PL), ces deuxièmes noeuds étant des dispositifs DCAN adaptés de façon à convertir un trafic compatible avec le protocole CAN en un trafic compatible avec le protocole de courant porteur, ledit procédé comprenant :
- la réception d'un message venant d'un premier noeud (contrôleur CAN) au niveau d'un deuxième noeud correspondant (dispositif DCAN), ledit message comprenant des données d'arbitrage dudit premier réseau de communication (réseau CAN) ;
- la génération d'une trame de message au niveau dudit deuxième noeud (dispositif CAN), ladite trame de message ayant un préambule de début (FrameStart) comprenant une séquence d'arbitrage modifiée dudit premier réseau de communication (réseau CAN), cette séquence d'arbitrage modifiée étant générée en se basant sur un arbitrage transfrontalier, qui est un arbitrage double, sur différents types de réseaux, ladite séquence d'arbitrage modifiée correspondant à un remplacement bit par bit de données d'arbitrage du premier réseau de communication (réseau CAN) adapté au deuxième réseau de communication existant physiquement (PL) ; et
- la transmission de ladite trame de message sur ledit deuxième réseau de communication (PL) par ledit deuxième noeud correspondant (dispositif DCAN).

2. Procédé selon la revendication 1, dans lequel ladite trame de message générée comprend en outre au moins un ensemble de données (paquet de données), des informations de code de correction d'erreurs (bits ECC) et un suffixe de message (FrameEnd).

3. Procédé selon la revendication 1 ou 2, dans lequel ledit deuxième noeud (dispositif DCAN) est adapté de façon à détecter la transmission de données dans ledit deuxième réseau de communication (PL) et, à son tour, de façon à informer ledit premier noeud correspondant (contrôleur CAN) de suspendre l'envoi de messages.

4. Procédé selon l'une quelconque des revendications précédentes, dans lequel ledit deuxième noeud (dispositif DCAN) envoie un message réservé (DUMMYMSG) audit premier noeud correspondant (contrôleur CAN) après avoir détecté la transmission de données dans ledit deuxième réseau de communication (PL), ledit message réservé causant la perte de la procédure d'arbitrage dudit premier noeud (contrôleur CAN) à l'intérieur dudit premier réseau de communication (réseau CAN).

5. Procédé selon l'une quelconque des revendications précédentes, dans lequel ladite transmission de données détectée correspond à un trafic de données à l'intérieur dudit deuxième réseau de communication (PL) et/ou à un trafic de données du noeud correspondant (contrôleur CAN) à l'intérieur dudit premier réseau de communication de données (réseau CAN).

6. Procédé selon l'une quelconque des revendications précédentes, comprenant en outre la détection d'une contention de réseau dudit deuxième réseau de communication de données (PL) et l'envoi dudit message réservé (DUMMY-MSG) audit premier noeud correspondant (contrôleur CAN).

7. Procédé selon l'une quelconque des revendications précédentes, dans lequel ledit deuxième réseau de communication de données (PL) est un canal de communication câblé ou un canal de communication sans fil.

8. Procédé selon l'une quelconque des revendications précédentes, dans lequel ledit premier réseau de communication de données (réseau CAN) est un réseau en bus de réseau de multiplexage CAN (réseau CAN) basé sur protocole.

9. Système de transmission de données basé sur protocole, comprenant une pluralité de premiers noeuds (contrôleurs CAN), ces premiers noeuds étant des contrôleurs CAN, et une pluralité de deuxième noeuds (dispositifs DCAN), lesdits deuxièmes noeuds devant communiquer au moyen d'un deuxième réseau de communication (PL), ces deuxièmes noeuds étant des dispositifs DCAN adaptés de façon à convertir un trafic compatible avec le protocole CAN en un trafic compatible avec le protocole de courant porteur, et lesdits premiers noeuds et deuxièmes noeuds étant adaptés de façon à communiquer conformément au procédé selon l'une quelconque des revendications précédentes.

10. Système de données selon la revendication 9, dans lequel lesdits premiers noeuds (contrôleurs CAN) comportent une interface communication pour communiquer avec ledit deuxième noeud correspondant (dispositifs DCAN) en utilisant un protocole de premier réseau.

11. Système de données selon la revendication 9 ou 10, dans lequel lesdits deuxièmes noeuds (dispositifs DCAN) comportent une première interface de communication pour communiquer avec ledit premier noeud correspondant (contrôleur CAN) en utilisant un protocole de premier réseau, et une deuxième interface de communication pour communiquer sur un deuxième réseau de communication (PL) et/ou sur un réseau sans fil en utilisant un protocole de deuxième réseau.

12. Système de données selon l'une quelconque des revendications 9 à 11, dans lequel ladite première interface de communication est un CAN, un CAN FD, un CAN à grande vitesse, une gestion de dispositifs à distance (RDM) .

13. Système de données selon l'une quelconque des revendications 9 à 12, dans lequel ledit réseau sans fil est un réseau WIFI, un réseau 5G, un réseau Bluetooth.
